Europäisches Patentamt

European Patent Office

Office européen des brevets

(11) Publication number: **0 377 914**
**A1**

(12) **EUROPEAN PATENT APPLICATION**

(21) Application number: **89202856.4**

(22) Date of filing: **10.11.89**

(51) Int. Cl.⁵: **H04N 5/238**

The title of the invention has been amended (Guidelines for Examination in the EPO, A-III, 7.3).

(30) Priority: **16.11.88 NL 8802818**

(43) Date of publication of application:
**18.07.90 Bulletin 90/29**

(84) Designated Contracting States:
**AT DE ES FR GB IT NL**

(71) Applicant: **N.V. Philips' Gloeilampenfabrieken**
**Groenewoudseweg 1**
**NL-5621 BA Eindhoven(NL)**

(72) Inventor: **Kemper, Nicolaas Rudolf**
**c/o INT. OCTROOIBUREAU B.V. Prof.**
**Holstlaan 6**
**NL-5656 AA Eindhoven(NL)**
Inventor: **Ten Hoopen, Hendrik Gerrit**
**c/o INT. OCTROOIBUREAU B.V. Prof.**
**Holstlaan 6**
**NL-5656 AA Eindhoven(NL)**

(74) Representative: **Kooiman, Josephus Johannes**
**Antonius**
**INTERNATIONAAL OCTROOIBUREAU B.V.**
**Prof. Holstlaan 6**
**NL-5656 AA Eindhoven(NL)**

(54) **Camera with a solid-state image sensor, containing mechanical and electronic shutters.**

(57) The camera and the shutter device each have two rotary discs or choppers (CH1, CH2) which are shaped as sectors of a circle and are each secured to a separate rotatable shaft (AX1, AX2, respectively) for interrupting the radiation path in front of the image sensor (FT) which is suitable for picking up and converting radiation into charge packets which are processed to a picture signal formed line and field-sequentially or frame-sequentially. The rotary disc (CH2) has an arc of a circle which is of the order of or larger than 180°. Slits (SL1, SL2) may be present between the rotary discs (CH1, CH2) during a joint rotation for which the shaft rotation frequency is selectably equal to the field or the frame frequency, or only one of the rotary discs (CH1, CH2) rotates. Combined with an electronic shutter circuit at the sensor (FT), which operates with a removal of charge packets under the control of a reset signal, a multifunctional camera is realised for television, photographic and/or cinematographic recording.

FIG. 2

# Camera including a solid-state image sensor and a shutter device, and shutter device suitable for the camera.

The invention relates to a camera including a solid-state image sensor for picking up and converting radiation into charge packets which are processed to a picture signal formed line and field-sequentially or frame-sequentially, and a shutter device which is arranged in a radiation path to the image sensor for blocking the radiation path, said shutter device having two rotary discs which are shaped as sectors of a circle and are each secured to a separate shaft for interrupting the radiation path, and having at least one synchronized motor for obtaining rotation of the respective shafts.

The invention also relates to a shutter device suitable for the camera.

Such a camera for television recording and a suitable shutter device for this camera are known from United States Patent 4,532,550. This Patent describes that the solid-state image sensor is, for example a frame transfer sensor. During a picture information integration period picked-up picture information, which is present in the form of charge packets in a sensor image section, is transferred to a sensor storage section in a subsequent short-lasting frame transfer period. To prevent the charge packets from being influenced by incident radiation during the transfer period, the shutter device interrupts the radiation path. To this end the use of one rotary disc in the form of a sector of a circle is sufficient. The Patent describes that the use of the second identical rotary disc creates a possibility of controlling the picture information integration period, i.e. the illumination period if light is used as radiation. For this purpose the two rotary disc shafts are driven by a respective motor which is synchronized by a field-frequency signal associated with the line and field-sequential picture signal. The two motors are, however, driven with a phase shift, while the value of the phase difference determines the extent of the mutual shielding of the rotary discs. A larger or smaller mutual shielding results in a longer or shorter integration or illumination period, respectively.

It is an object of the invention, inter alia , to realise a multi-functional camera suitable for television, photographic and cinematographic recording, while maintaining the afore-mentioned aspects, using, in a manner adapted thereto a shutter device having at least two rotary discs with separate shafts. To this end a camera according to the invention is characterized in that it further comprises an electronic shutter circuit at the sensor, which circuit operates with a removal of charge packets under the control of a reset signal, one of the circle sector-shaped rotary discs having an arc of a circle which is of the order of or larger than 180°, the frequency of rotation of the rotary disc shafts being selectably equal to the field or the frame frequency.

The combination of the rotary disc having the specific size, the electronic shutter circuit and the selectability of the frequency of rotation leads to a camera which is multifunctional. The use of the rotary discs as mechanical shutters, together with the electronic shutter action, provides the advantage of an optimum processing of radiation. The rotary disc formats may be minimal, while the electronic shutter action, in so far as is necessary for the selected camera recording, deletes an unwanted information recording.

A shutter device having two rotary discs which are shaped as sectors of a circle and are each secured to separate shafts for interrupting the radiation path is characterized in that one of the circle sector-shaped rotary discs has an arc of a circle which is of the order of or larger than 180°.

The invention will now be described in greater detail by way of example with reference to the accompanying drawings in which

Fig. 1 is a block diagram of a camera according to the invention,

Fig. 2 is an embodiment shown diagrammatically of a shutter device with two rotary discs according to the invention,

Fig. 3a illustrates a possible operation of the shutter device according to Fig. 2 in which a narrow rotary disc is only operative at a field-frequency shaft rotation and Fig. 3b shows time diagrams to explain the operation of the camera,

Figs. 4a and 4b are similarly associated with the operation of only one wide rotary disc at a frame-frequency shaft rotation,

Figs. 5a and 5b are associated with an operation of the narrow rotary disc at the field-frequency shaft rotation, in combination with an electronic shutter circuit,

Figs. 6a and 6b are comparable with Figs. 5a and 5b, but are associated with the wide rotary disc operating at the frame-frequency shaft rotation,

Figs. 7a and 7b are associated with an operation of the narrow and the wide rotary discs at the field-frequency shaft rotation, in combination with the electronic shutter circuit,

Figs. 8a and 8b are comparable with Figs. 7a and 7b, but at the frame-frequency shaft rotation.

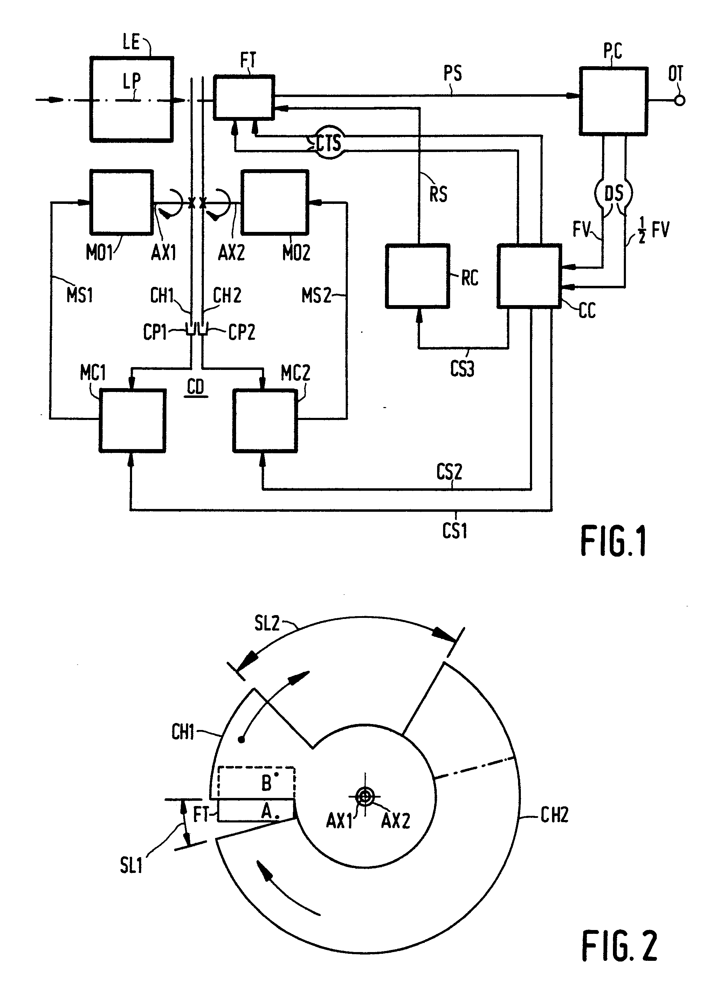

In Fig. 1, which is a block diagram of a camera according to the invention, the reference FT denotes a solid-state image sensor. The sensor FT is, for example a frame transfer sensor or a combination of a frame transfer sensor and a frame interline transfer sensor. Generally it is assumed that the sensor FT has an image section comprising sensor image elements for converting incident radiation such as light into charge packets during an information integration period and a storage section shielded from light radiation comprising storage elements which take over the charge packet information during a transfer period. To prevent the charge packets from being influenced by a continuous integration of incident light during this transfer period, the incidence of light is interrupted by means of a shutter device CD. A first parallel-in, series-out shift register follows the storage section and a second shift register is arranged between the image section and the storage section, which second shift register may operate as a parallel-in, parallel-out and as a parallel-in, series-out shift register. Both shift registers which are shielded from light radiation have an output for the possible supply of a picture signal which is formed line and field-sequentially and which may become available at a single sensor output via a change-over switch. The following two examples are mentioned for a possible use of the sensor FT.

An abrupt, short-lasting frame transfer, through the second intermediate shift register, followed by the known parallel-in, series-out signal processing at the first final shift register. In this case the incidence of light is interrupted during the short-lasting frame transfer.

A parallel-in, parallel-out signal processing at the intermediate shift register, followed by a parallel-in, series-out signal processing so that during one frame period always one of two lines reaches the storage section and the other is supplied at the output, while in the subsequent field period the storage section supplies the stored picture information via the final shift register. In this case the incidence of light is interrupted during at least the first-mentioned field period.

To obtain the interruption of the incidence of light, the shutter device CD of Fig. 1 has two rotary discs or choppers $CH_1 1$ and CH2 shapes of which are shown in Fig. 2. Fig. 2 shows that the rotary disc CH1 is a narrow disc shaped as a sector of a circle which is opaque to light and is secured to a rotatable shaft AX1. The rotary disc CH2 is a wide disc shaped as a sector of a circle which is opaque to light and is secured to a separate rotatable shaft AX2. Arrows indicate the direction of rotation if the two rotary discs rotate at the same speed and at a a given mutual position. In this case there are two slits SL1 and SL2 via which light may be incident on the sensor FT whose image section is shown with two sensor image elements A and B. It follows from the direction of rotation shown that the interruption of the incidence of light or the release for the incidence of light is effected first at the element A and after some time at the element B.

The combination shown in Fig. 2 of the known narrow rotary disc CH1 and the wide disc CH2, which are each individually or jointly rotatable at a given speed, constitutes one aspect of the invention. In this case it is essential that the wide rotary disc CH2 has an arc of a circle which is of the order of or larger than 180°. The minimum format is shown by means of a dot and dash line. For obtaining widths of the slits SL1 and SL2 which are desired in practice, it is advantageous to choose the sum of the arcs of a circle of the two circle sector-shaped rotary discs CH1 and CH2 to be of the order of 270°.

According to Fig. 1 the rotary discs CH1 and CH2 of the shutter device CD are secured to the shafts AX1 and AX2 shown, which are rotatable by means of motors MO1 and MO2. Instead of two motors MO, one motor could be provided which can drive one or both shafts AX via a coupling mechanism. The motors MO1 and MO2 are driven by motor signals MS1 and MS2, respectively, from motor drive circuits MC1 and MC2, respectively. Inputs of the circuits MC1 and MC2 are connected to position-determining means CP1 and CP2, respectively. The position-determining means CP fix the mutual positions of the rotating discs CH1 and CH2 with the different slit widths of the slits SL1 and SL2 and indicate which rotary disc is stationary or rotating. For synchronizing purposes shutter (synchronizing) signals CS1 and CS2 are applied to other inputs of the circuits MC1 and MC2, respectively, which signals are supplied by a control circuit CC. The disc rotation is controlled via the shutter signals CS1 and CS2 by the choice of rotation or no rotation, accompanied by the frequency of rotation which is selectably equal to a field frequency FV or a frame frequency $\frac{1}{2}$ FV. These frequencies are associated with a picture signal formed line and field-sequentially or frame-sequentially which is denoted by PS in Fig. 1 and is supplied by the image sensor FT.

The shutter device CD is constructed in the manner described with the motor drive circuits MC, the motors MO, the rotary discs CH and the position-determining means CP. The rotary discs CH are either individually or jointly rotatable in front of the sensor FT by which a light radiation path LP can be interrupted. The reference LE denotes a system of lenses in which a part of the light radiation path LP occurs. Instead of between the system of lenses LE and the image sensor FT, the rotary discs CH may be arranged in the lens system itself.

The sensor FT supplies the picture signal PS under the control of clock pulse and transmission signals CTS from the control circuit CC. The signals CTS occur at a connection lead which is shown in a multiple form and they may comprise multi-phase clock pulses in known manner. The picture signal PS is applied to a signal processing circuit PC in which known signal processing operations are performed such as gamma and aperture correction etc., whereafter the processed signal PS occurs at an output OT for further processing operations. In a colour television camera the single sensor FT may be provided with a colour strip or colour mozaic filter, or several sensors FT may be provided each of which supplies a colour signal PS to the circuit PC either or not having various outputs.

For control purposes the circuit PC supplies data signals DS to the control circuit CC. The field and frame frequencies FV and $\frac{1}{2}$ FV, which are associated with a field and a frame synchronizing signal, respectively, are denoted at the multiple connection lead. A further data signal may be a luminance signal having a peak white amplitude by means of which the slit widths of the slits SL1 and SL2 of Fig. 2 can be controlled. A longer picture information integration period at the sensor FT is associated with a wider slit.

For a further control facility of the picture information integration period the camera according to Fig. 1 is provided with an electronic shutter control circuit RC. The control circuit CC applies a shutter (synchronizing) signal CS3 to the circuit RC which thereby applies a reset signal RS to the sensor FT. The reset signal RS ensures in known manner that charge packets in the sensor FT are removed so that the effective picture information integration period is controlled. For a possible embodiment of an electronic shutter circuit (RC, FT) reference is made to United States Patent 4,769,709.

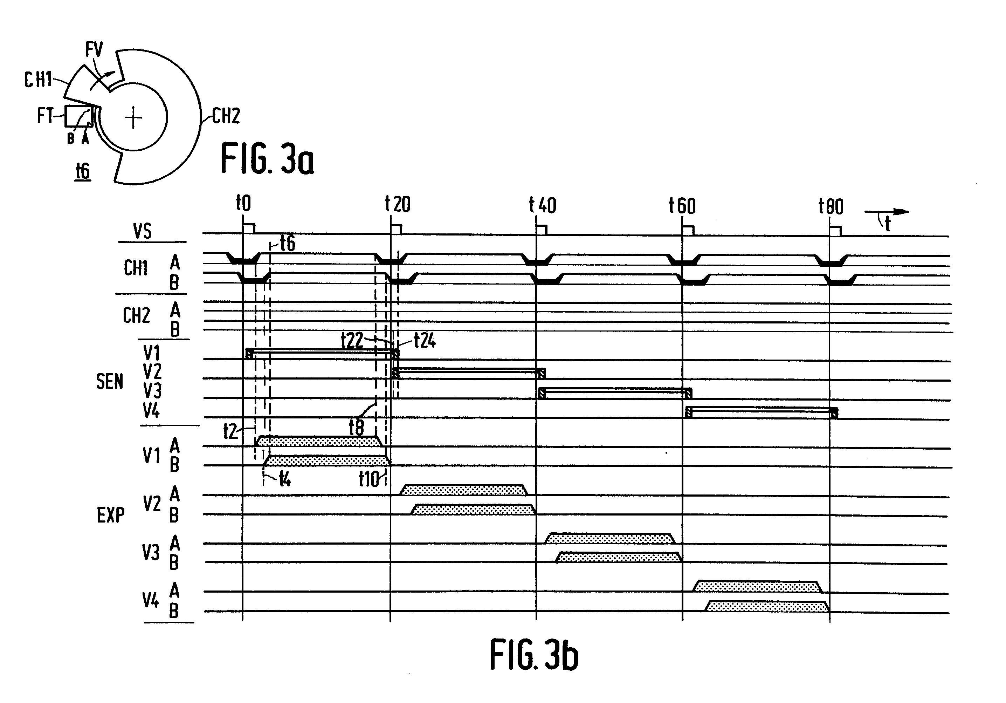

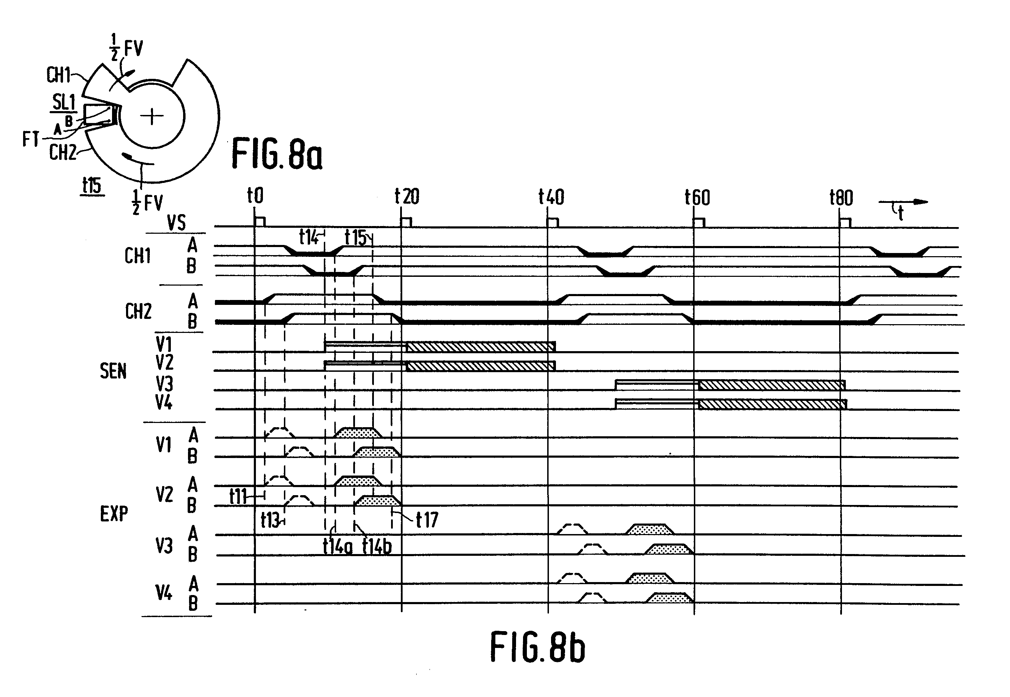

To elucidate the multifunctionality of the camera described with reference to Fig. 1 and formed with the combination of the rotary discs CH1 and CH2 (shown in Fig. 2), the electronic shutter circuit (RC, FT) and the selectability of the shaft rotation frequencies equal to the field frequency FV or the frame frequency $\frac{1}{2}$ FV, Figs. 3a and 3b to 8a and 8b illustrate the possibilities. Figs. 3a to 8a show the rotary discs CH1 and CH2 in a given position in front of the image section of the sensor FT with the sensor image elements A and B, while discs which are rotating are denoted by an arrow. A shaft rotation frequency equal to the field frequency or the frame frequency is denoted by FV and $\frac{1}{2}$ FV, respectively, at the arrow. A stationary disc CH1 or CH2 is in a position in which the light radiation path LP1 of Fig. 1 is released. Figs. 3b to 8b show time diagrams associated with the operation of the camera. In the Figures the same references have been given in comparable time diagrams, in so far as they are important for the invention.

In the Figures a diagram VS shows a field-synchronizing signal as a function of time t. Instants t0, t20, t40, t60 and t80 are initial instants of field-synchronizing pulses. The field-synchronizing pulse is assumed to occur in a respective field blanking period which, according to television standards, is, for example 8% of a field period of, for example 20 ms or 16.6833 ms at a respective field frequency of Hz or 59.94 Hz. The Figures are shown for the case where a field frequency FV is equal to 50 Hz and a frame frequency $\frac{1}{2}$ FV is equal to 25 Hz. The field-synchronizing pulses shown with a duration of, for example 1.2 ms occur within the field-blanking period of 1.6 ms.

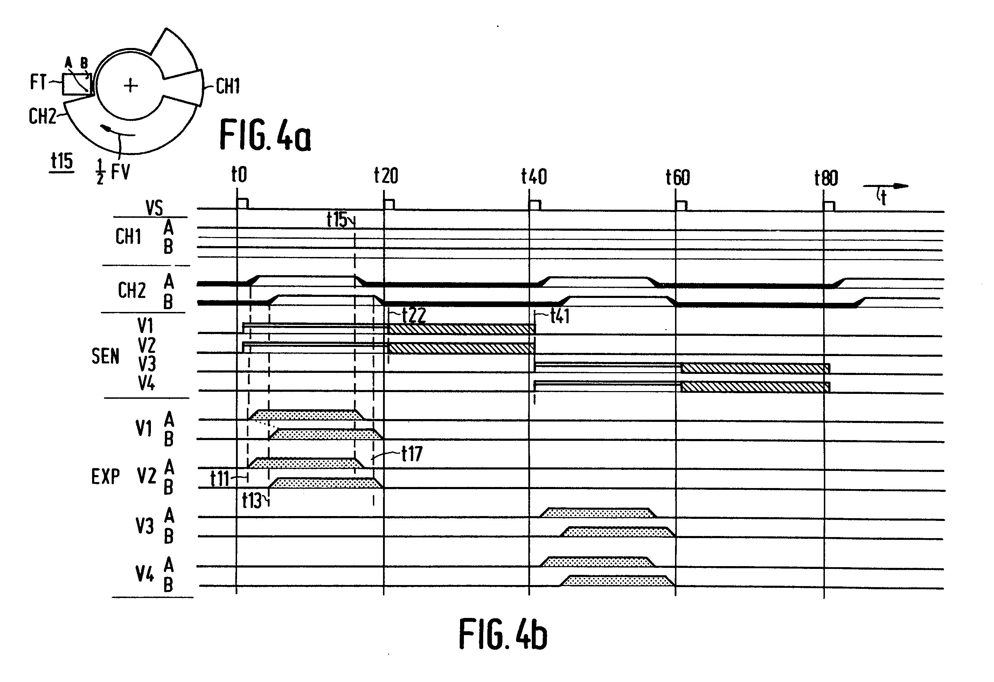

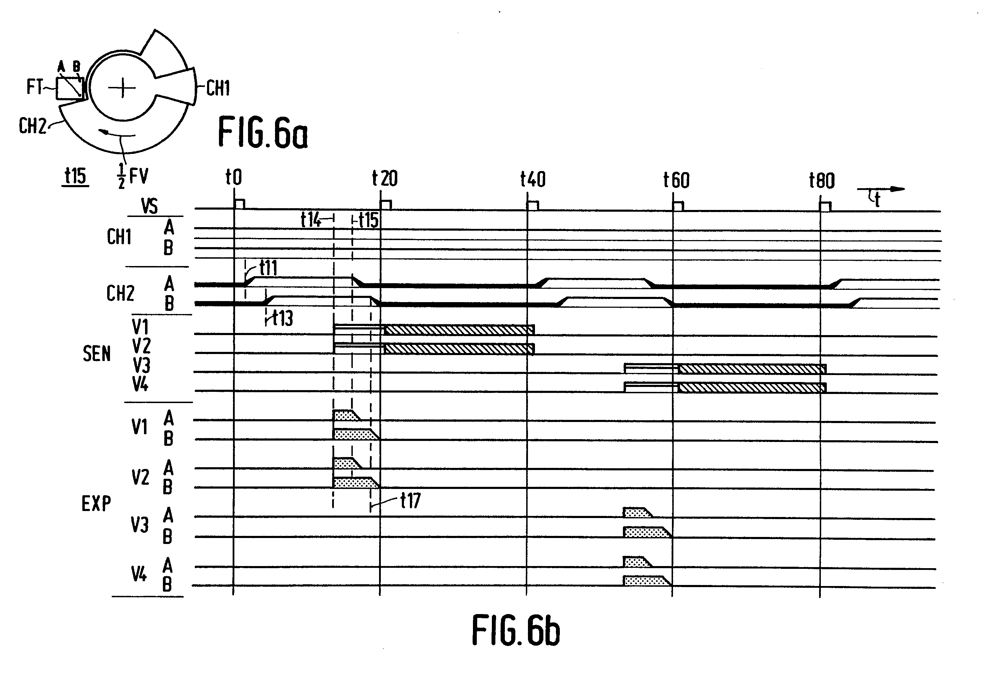

The time diagram CH1 is associated with the position of the rotary disc CH1 viewed from the image sensor element A or B of the image section of the sensor FT. Figs. 3b, 5b, 7b and 8b show that the time diagram CH1 A anticipates the time diagram CH1 B. Figs. 4b and 6b are associated with the stationary disc CH$_1$. Figs. 3b, 5b and 7b show that the shaft rotation frequency of the disc CH1 is equal to the field frequency FV, while it holds for Fig. 8b that this frequency is equal to the frame frequency $\frac{1}{2}$ FV.

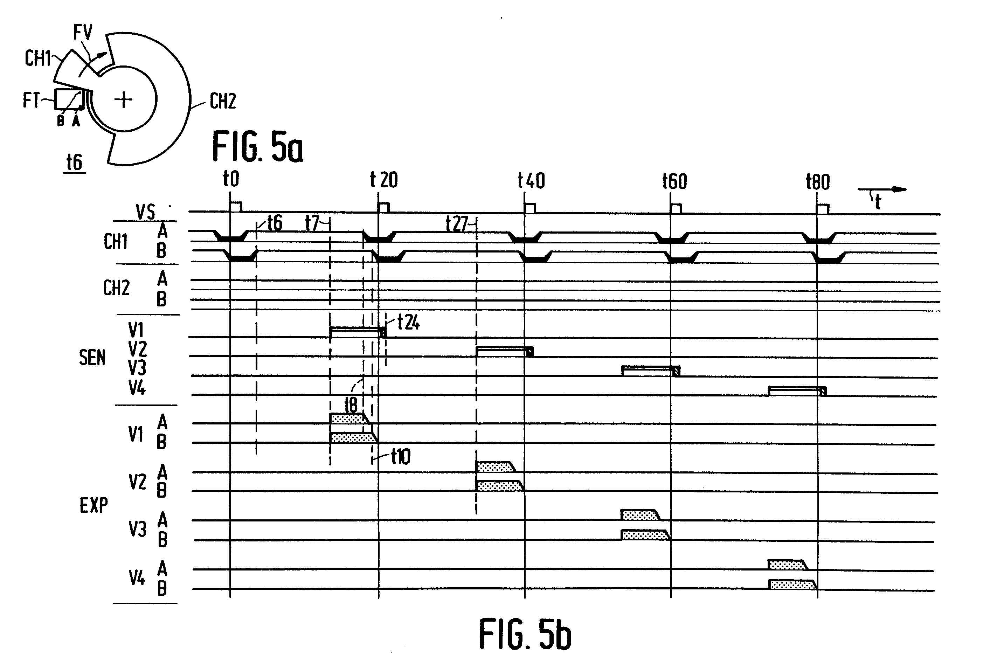

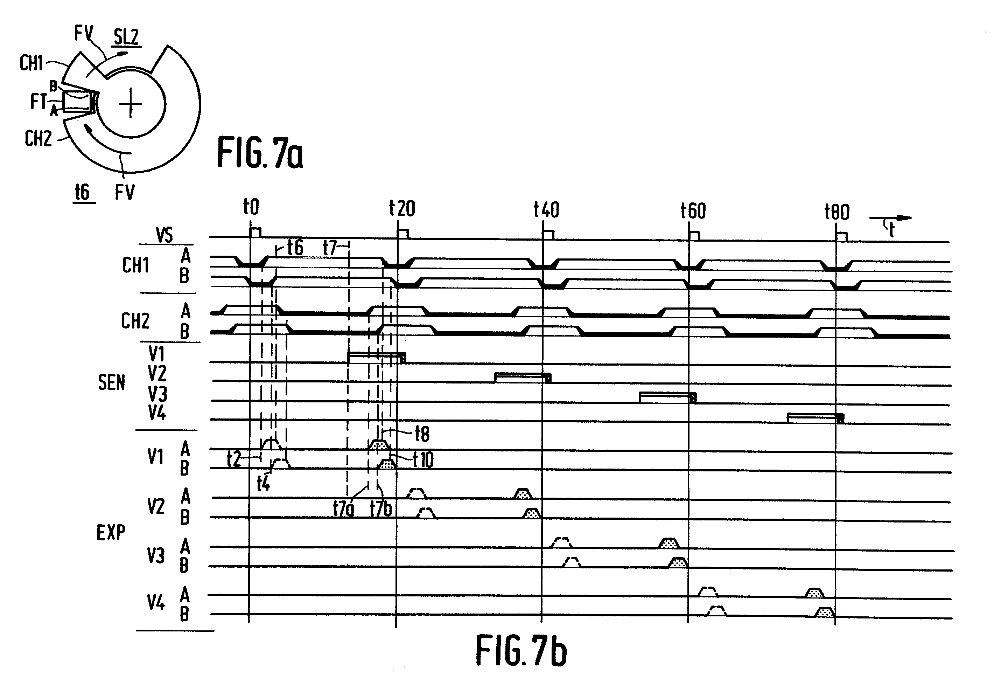

Similarly, the time diagram CH2 shows the position of the disc, either stationary or rotating. Figs. 3b and 5b are associated with a stationary disc CH$_2$, while in Figs. 4b, 6b and 8b the shaft rotation frequency is equal to the frame frequency $\frac{1}{2}$ FV, and in Fig. 7b it is equal to the field frequency FV.

A time diagram SEN indicates the image pick-up sensitivity by means of a pulse, which implies that there is a possibility of picture information integration in the image section of the sensor FT. If the shutter device CD interrupts the incidence of light, the integration facility, i.e. the pick-up sensitivity is not utilized. If the electronic shutter circuit (RC, FT) operates continuously or with a reset pulse in known manner, this is indicated in the time diagram by the local absence of the pulse (Figs. 5b, 6b, 7b and 8b). In the time diagram SEN a shaded pulse portion indicates that the interruption of the incidence of light is required during this frame transfer period in order to prevent the charge packets from being influenced, which might lead to a smear effect, upon picture signal display. A transfer period of approximately 0.6 ms is mentioned as an example. The time diagram SEN is split up into four fields V1, V2, V3 and V4. This has been done for the sake of simplicity and clarity of the Figures. If the time diagram SEN is shown in the same way as the time diagrams VS, CH1 A, CH1 B, CH2 A and CH2 B, the result is one composite time diagram comprising the four time diagrams shown.

A time diagram EXP illustrates the effective picture information integration period as a result of the operation of the shutter device CD and the possibly operative electronic shutter circuit (RC, FT), as holds true for the Figs. 5b, 6b, 7b and 8b. The split-up into four fields V1, V2, V3 and V4 described with reference to the time diagram SEN is also carried out in this case.

Fig. 3b shows instants indicated by t2 and t4 at which the rotary disc $CH_1$ is about to release the sensor image element A or B, respectively, to the incidence of light. At an instant t6 the sensor element B is released completely and it is assumed that immediately after this instant t6 the rotating disc CH1 is in the position shown in Fig. 3a. The gradual release of the sensor elements A and B is shown by means of the slope after the instants t2 and t4. The steepness of the slope shown is associated with the field-frequency shaft rotation of the rotary disc. At an instant t8 the gradual interruption of the incidence of light starts at the sensor element A and subsequently at the sensor element B at an instant t10. The instants t22 and t24 denote the respective initial and final instants for the frame transfer period. It follows from the time diagram $CH_1$ that the entire image section of the sensor FT is shielded by the rotary disc CH1 during this period. Fig. 3b illustrates the camera operation with the narrow rotary disc $CH_1$ having the field-frequency shaft rotation for the abrupt, short-lasting frame transfer. In this case the sensor FT operates with the said final shift register for the supply of the picture signal PS of Fig. 1.

In Fig. 4b the references t11 and t13 denote instants at which the rotary disc CH2 is about to release the sensor elements A and B, respectively, to the incidence of light. Since the gradual release is effected at a frame-frequency shaft rotation of the rotary disc, the steepness of the slope shown after the instants t11 and t13 is half that of the steepness shown after the instants t2 and t4 of Fig. 4b. At an instant t15 the gradual interruption of the incidence of light starts at the sensor element A and subsrquently at the sensor element B at an instant t17. It is assumed that just before the instant t15 the rotating disc CH2 is in the position shown in Fig. 4a. Instants t22 and t41 denote the initial and final instants, respectively, for the frame transfer period. In this case the sensor FT operates with the described first and second shift registers. While the image section of the sensor FT is shielded during the period between the instants t22 and t41, the intermediate shift register supplies the picture signal every other line, while the storage section of the sensor FT is filled with the other line. After the instant t41 there is the release to the incidence of light on the image section of the sensor FT, while the storage section supplies the picture signal via the final shift register during the light integration period. Fig. 4b illustrates the camera operation with the wide rotary disc CH2 having the frame-frequency shaft rotation for the frame transfer lasting at least one field period. To this end the rotary disc $CH_2$ should have the minimum length of the arc of a circle of the order of 180°. The camera shown in Fig. 1 is operative, for example for recording a stationary picture. The picture signals associated with the two fields are in fact generated in the same picture information integration period.

Fig. 5b shows the instants t6, t8 and t10 which are also shown in Fig. 3b. Before and after the instant t6 up to an instant t7 the time diagram SEN indicates insensitivity to light. This is caused by the electronic shutter circuit (RC, FT), by the presence of a reset pulse in the signal RS during this period or by the occurrence of a short-lasting reset pulse ending just before the instant t7. The electronic shutter period is, for example, present between the instant t24 and an instant t27 which periodically corresponds to the instant t7. The release of the sensor FT to light integration at the instant t7 (or t27) is effected for all sensor image elements at the same moment with which the steep slope in the time diagram EXP is associated. Subsequently the sensor element A is gradually shielded at the instant t8 and the sensor element B is gradually shielded at the instant t10 by the rotary disc CH1. The combination of the abrupt operation of the electronic shutter circuit (RC, FT) and the gradual operation of the shutter device CD leads to a shutter shadow effect upon display of the picture signal. In fact, at the same local brightness at the sensor elements A and B the sensor element A receives a smaller charge packet than the sensor element B, which charge packet corresponds to the area shown in broken lines. In other words: the period t8 - t7 is shorter than the period t10 - t7. The shutter shadow effect becomes stronger as sthe exposure times are shorter.

As compared with the camera described with reference to Fig. 3b, the camera operating in accordance with Fig. 5b has the extra electronic shutter action.

Fig. 6b shows the instants t11, t13, t15 and t17 which are also shown in Fig. 4b. An instant t14 is associated in the way described in Fig. 5b with the start of the release of the electronic shutter. The described shutter shadow effect is stronger than in the camera operating in accordance with Fig. 5b. In both cases the shutter shadow effect may be acceptable until a minimum exposure time.

Fig. 7b shows instants t2, t4, t6, t7, t8 and t10 already shown in Figs. 3b and 5b. As has been described, no picture information in the form of charge packets will be obtained before the instant t7 because the electronic shutter prevents them from being generated, or the charge packets are removed after they have been generated. The pulses shown in broken lines, following the instants t2 and t4, are associated with the subsequent removal of charge packets. The removal is effected after the instant t6 and before the instant t7. This implies that the results of the incidence of light via the slit SL1 of Fig. 2 are eliminated. After the instant t7 the gradual incidence of light via the slit SL2 on the sensor elements A and B starts at instants t7a and t7b, respectively.

With reference to the described shutter shadow effect the time diagram EXP in Fig. 7b shows that this effect is absent. The camera operating in accordance with Fig. 7b can operate with shorter and longer exposure times by means of a simple adaptation of the width of the slit SL2, for television, photographic and cinematographic recording considered as a series of photographic recordings.

Fig. 8b shows the instants t11, t13, t14, t15 and t17 already shown in Figs. 4b and 6b. In comparison with the instant t7 in Fig. 7b, the picture information shown in broken lines is removed before the instant t14. After the instant t14 the gradual incidence of light via the slit SL1 on the sensor elements A and B starts at instant t14a and t14b, respectively. Concerning the absence of the shutter shadow effect and the use of the camera, reference is made to the description of Fig. 7b.

It is apparent from the description of Figs. 7b and 8b that the slit SL2 is active in the first case and the slit SL1 is active in the second case, the results caused by the slit SL1 or SL2 being eliminated or prevented by the electronic shutter. The combination of the slits SL1 and SL2 and the electronic shutter circuit (RC, FT) is an aspect leading to the multifunctionality of the camera according to Fig. 1. It appears that practical exposure times are realised in the case that the sum of the arcs of a circle of the two circle sector-shaped rotary discs CH1 and CH2 is in the shown order of 270°.

The embodiment using two rotary discs CH1 and CH2 each secured to separate shafts AX1 and AX2, respectively, is specific of the shutter device according to the invention, the rotary disc CH2 having an arc of a circle which is of the order of or larger than 180°.

**Claims**

1. A camera including a solid-state image sensor for picking up and converting radiation into charge packets which are processed to a picture signal formed line and field-sequentially or frame-sequentially, and a shutter device which is arranged in a radiation path to the image sensor for blocking the radiation path, said shutter device having two rotary discs which are shaped as sectors of a circle and are each secured to a separate shaft for interrupting the radiation path, and having at least one synchronized motor for obtaining rotation of the respective shafts, characterized in that the camera further comprises an electronic shutter circuit at the sensor, which circuit operates with a removal of charge packets under the control of a reset signal, one of the circle sector-shaped rotary discs having an arc of a circle which is of the order of or larger than 180°, the frequency of rotation of the rotary disc shafts being selectably equal to the field or the frame frequency.

2. A shutter device suitable for use in the camera as claimed in Claim 1 which device comprises two rotary discs which are shaped as sectors of a circle and are each secured to separate shafts for interrupting the radiation path, characterized in that one of the circle sector-shaped rotary discs has an arc of a circle which is of the order of or larger than 180°.

3. A shutter device as claimed in Claim 2, characterized in that the sum of the arcs of a circle of the two circle sector-shaped rotary discs is of the order of 270°.

FIG.1

FIG. 2

FIG. 3a

FIG. 3b

EP 0 377 916 A1

2-Ⅶ-PHN 12732

FIG.4a

FIG.4b

FIG. 5a

FIG. 5b

VS
CH1 { A B
CH2 { A B

SEN { V1 V2 V3 V4

EXP { V1 { A B
V2 { A B
V3 { A B
V4 { A B

t0  t6 t7  t20  t24  t27  t40  t60  t80  t

t6

CH2
FV
CH1
FT
B A

4-VII-PHN 12 732

EP 0 377 916 A1

5-Ⅶ-PHN 12732

FT — A B

CH1

CH2

½ FV

**FIG.6a**

t15

t0    t20    t40    t60    t80

t

VS

t14    t15

CH1 A B

t11

CH2 A B

t13

SEN V1 V2 V3 V4

V1 A B

V2 A B

t17

EXP

V3 A B

V4 A B

**FIG.6b**

FIG.7a

FIG.7b

EP 0 377 916 A1

6-Ⅵ-PHN 12732

FIG.8a

FIG.8b

EP 0 377 916 A1

7-ⅩⅡ-PHN 12732

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 163 412 (RCA CORP.)<br>* Page 5, line 18 - page 17, line 13 * | 1 | H 04 N 5/238 |
| A | | 2,3 | |
| Y | EP-A-0 273 319 (FUJI PHOTO FILM CO.)<br>* Column 3, line 35 - column 5, line 35; column 10, line 23 - column 13, line 21 * | 1 | |
| Y | GB-A-2 112 603 (SONY CORP.)<br>* Page 3, lines 16-37; page 3, line 127 - page 5, line 18; figure 1 * | 1 | |
| Y | PATENT ABSTRACTS OF JAPAN, vol. 7, no. 288 (E-128)[1433], 22nd December 1983;<br>& JP-A-58 164 379 (SONY CORP.) | 1 | |
| A | PATENT ABSTRACTS OF JAPAN, vol. 9, no. 284 (E-357)[2007], 12th November 1985;<br>& JP-A-60 125 074 (KONISHIROKU SHASHIN KOGYO K.K.) | 1 | TECHNICAL FIELDS SEARCHED (Int. Cl.5) |
| A | EP-A-0 032 334 (THOMSON CSF)<br>* Page 4, line 11 - page 5, line 11; page 6, line 9 - page 8, line 29; figures 1,3a-f * | 1,2,3 | H 04 N 5<br>H 04 N 3<br>G 03 B 9 |

The present search report has been drawn up for all claims

| Place of search | Date of completion of the search | Examiner |
|---|---|---|
| THE HAGUE | 06-02-1990 | DUHR R.H.J.E. |

EPO FORM 1503 03.82 (P0401)